# EUROPÄISCHE PATENTSCHRIFT

(11) **EP 3 947 943 B1**
(45) Veröffentlichungstag und Bekanntmachung des Hinweises auf die Patenterteilung: **30.07.2025**
(21) Anmeldenummer: 20714195.3
(22) Anmeldetag: 25.03.2020
(51) Int. Cl.: F02D 41/00, F02D 41/30, F02M 26/06, F02M 26/36, F02D 41/02, F02D 35/02, F02D 41/14

(54) **VERFAHREN ZUM BETREIBEN EINES VERBRENNUNGSMOTORS SOWIE VERBRENNUNGSMOTOR**
METHOD FOR OPERATING AN INTERNAL COMBUSTION ENGINE AND AN INTERNAL COMBUSTION ENGINE
PROCÉDÉ POUR FAIRE FONCTIONNER UN MOTEUR À COMBUSTION INTERNE AINSI QUE MOTEUR À COMBUSTION INTERNE

(30) Priorität: 25.03.2019 DE 102019107514
(43) Veröffentlichungstag der Anmeldung: 09.02.2022
(73) Patentinhaber: VOLKSWAGEN AG, 38440 Wolfsburg (DE)
(72) Erfinder: BLOCK, Gerald, 38165 Lehre (DE); GROTE, Andreas, 38176 Wendeburg (DE); MAAS, Christian, 38179 Schwülper (DE); BRANDES-GROTE, Kerstin, 38176 Wendeburg (DE)
(74) Vertreter: Gulde & Partner
(86) Internationale Anmeldenummer: PCT/EP2020/058260
(87) Internationale Veröffentlichungsnummer: WO 2020/193594

(56) Entgegenhaltungen:
- EP-A1- 1 432 897
- DE-A1- 102005 004 880
- DE-A1- 102016 123 251
- DE-A1- 102016 208 208
- DE-B3- 102004 033 394
- GB-A- 2 484 495
- US-A1- 2008 077 305
- US-B1- 6 272 850

## Beschreibung

Die Erfindung betrifft ein Verfahren zum Betreiben eines Verbrennungsmotors mit einem Luftversorgungssystem und einer Abgasanlage, sowie einen Verbrennungsmotor zur Durchführung eines solchen Verfahrens gemäß dem Oberbegriff der unabhängigen Patentansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei ist es zur Einhaltung der zukünftigen Emissionsgrenzwerte (zum Beispiel EU7, US SULEV20) notwendig, einen Ottomotor durchgängig mit einem stöchiometrischen Verbrennungsluftgemisch zu betreiben, um eine funktionssichere Abgasnachbehandlung bei allen Betriebspunkten des Verbrennungsmotors zu gewährleisten. Bei modernen Verbrennungsmotoren, welche durch "Downsizing" eine sehr hohe spezifische Leistungsdichte aufweisen, kann bei hohen abgerufenen Motorleistungen die Abgastemperatur sehr stark ansteigen. Wird bei einem solchen Lastpunkt der Verbrennungsmotor mit einem stöchiometrischen Verbrennungsluftverhältnis betrieben, ergibt sich ein hoher Wärmeeintrag in die Abgasnachbehandlungskomponenten, welcher durch exotherme katalytische Reaktionen an den Abgasnachbehandlungskomponenten noch verstärkt werden kann. Dabei können Betriebstemperaturen der Abgasnachbehandlungskomponenten auftreten, welche oberhalb der dauerhaft zulässigen Materialgrenztemperatur liegen und schlussendlich zu einer thermischen Schädigung der Abgasnachbehandlungskomponenten bis hin zum Ausfall dieser Abgasnachbehandlungskomponenten führen können.

Aus dem Stand der Technik sind verschiedene Maßnahmen bekannt, um bei einem Volllastbetrieb des Verbrennungsmotors die Abgastemperatur zu senken. Eine erste Maßnahme zur Absenkung der Abgastemperatur ist eine Anreicherung des Verbrennungsluftgemischs im Volllastbetrieb. Dabei wird das Verbrennungsluftverhältnis in Richtung eines unterstöchiometrischen Verbrennungsluftverhältnisses verschoben. Somit ist nicht mehr genug Sauerstoff in den Brennräumen vorhanden, um den Kraftstoff vollständig zu verbrennen, was zu einer Kühlung der Verbrennung und des Abgases durch den unverbrannten Kraftstoff führt. Gleichzeitig steigen jedoch auch die Abgasemissionen, insbesondere die Emissionen an unverbrannten Kohlenwasserstoffen und Kohlenmonoxid sowie der Kraftstoffverbrauch.

Als weitere Maßnahme ist die Verwendung eines Abgaskühlers bekannt. Dabei wird die Kühlleistung so gewählt, dass die Abgastemperatur stromaufwärts des Einlasses der Abgasnachbehandlungskomponente derart gesenkt wird, dass eine thermische Schädigung der Abgasnachbehandlungskomponente vermieden wird. Dabei ist der zusätzliche Wärmeeintrag in die Abgasnachbehandlungskomponente durch eine exotherme Reaktion an der Abgasnachbehandlungskomponente zu berücksichtigen. Bei Verbrennungsmotoren mit hoher spezifischer Motorleistung sind jedoch hohe Kühlleistungen notwendig, um eine hinreichende Kühlung des Abgasstroms unter allen Betriebsbedingungen sicherzustellen. Dies führt zu großen Abgaskühlern, welche einen hohen Bauraumbedarf aufweisen und das Gewicht eines Kraftfahrzeuges erhöhen. Daher werden solche Abgaskühler nur so groß ausgeführt, dass sie gerade die Funktion zum Bauteilschutz der Abgasnachbehandlungskomponenten erfüllen. Eine weitere Absenkung der Abgastemperatur im Rahmen eines Abgastemperaturmanagements kann daher nicht erfolgen. Darüber hinaus werden bei sehr hohen spezifischen Motorleistungen die Auslassventile sehr heiß und können mit dieser Maßnahme nicht abgekühlt werden, sodass ein stöchiometrischer Betrieb bei Volllast zu einer thermischen Schädigung der Auslassventile führen könnte.

Als weitere Maßnahme zur Reduzierung der Verbrennungstemperatur und der Abgastemperatur ist es bekannt, Wasser in die Brennräume des Verbrennungsmotors einzuspritzen. Obwohl eine solche Wassereinspritzung sehr wirkungsvoll ist, stehen den Vorteilen einige Nachteile gegenüber. Zum einen ist ein zusätzlicher Injektor zum Einbringen des Wassers notwendig. Ferner ist der Wasserverbrauch bei einem Lastprofil mit hohem Volllastanteil entsprechend hoch, was dazu führen kann, dass der Fahrer das Wasser ähnlich dem Kraftstoff bei jedem Tankstopp nachfüllen muss. Um eine Beschädigung des Verbrennungsmotors zu vermeiden, wird ein entmineralisiertes Wasser verwendet, was die Kosten für die Wassereinspritzung zusätzlich erhöht. Zudem sind Heizmaßnahmen für den Wassertank vorzusehen, um im Winter ein Einfrieren des Wassers zu vermeiden.

Aus der DE 10 2016 208 208 A1 ist ein Verbrennungsmotor für ein Kraftfahrzeug bekannt. Der Verbrennungsmotor ist mittels eines Abgasturboladers aufgeladen, wobei eine Niederdruck-Abgasrückführung den Abgaskanal des Verbrennungsmotors stromabwärts einer Turbine des Abgasturboladers und stromabwärts eines Katalysators mit dem Luftversorgungssystem stromaufwärts eines Verdichters des Abgasturboladers verbindet. Dabei ist in der Niederdruck-Abgasrückführung ein Kraftstoffeinspritzventil angeordnet, mit welchem Kraftstoff in das über die Niederdruck-Abgasrückführung zurückgeführte Abgas eingebracht werden kann.

Aus der DE 10 2016 214 284 A1 ist ein Verbrennungsmotor mit einem Abgasrückführungssystem bekannt, wobei in dem Abgasrückführungssystem ein Kraftstoffeinspritzventil angeordnet ist. Der Verbrennungsmotor weist ferner zusätzliche Kraftstoffeinspritzventile auf, mit welchen der Kraftstoff in einen Ansaugkanal des Verbrennungsmotors und/oder in die Brennräume des Verbrennungsmotors eingebracht werden kann. Dabei ist vorgesehen, dass der Kraftstoff in die Abgasrückführung eingebracht wird, um Ablagerungen oder Beläge aus dem Abgasrückführungssystem zu entfernen.

Aus der GB 2 484 495 A ist ein Verfahren zur Aufbereitung von Kraftstoff durch die Einspritzung des Kraftstoffs in eine Abgasrückführung bekannt. Dabei werden Sekundärluft und Kraftstoff in einen Abgasrückführungspfad eingespritzt und durch einen Katalysator exotherm umgesetzt.

Die DE 10 2005 004 880 A1 beschreibt ein Verfahren zur Abgastemperaturregelung für eine Brennkraftmaschine mit einer Vorrichtung zur Erfassung einer Abgastemperatur, einer Vorgabe einer Maximal-Abgastemperatur und einer Steuerung für eine Gemischaufbereitung mit den Parametern Verbrennungsluftverhältnis und Zylinderfüllung. Dabei wird bei Überschreitung der vorgegebenen Maximal-Abgastemperatur im Gemisch das Verbrennungsluftverhältnis bis zu einem unteren Grenzwert stetig oder in mehreren Schritten abgesenkt und bei Erreichen dieses Grenzwertes die Zylinderfüllung stetig oder in mehreren Schritten reduziert. Damit kann erreicht werden, dass durch diese Maßnahmen die Abgastemperatur gesenkt werden kann, ohne dass daraus Fahrkomforteinbußen resultieren.

US 6 272 850 B1 offenbart ein elektrisches Steuergerät für einen Verbrennungsmotor, welches das Verbrennungsluftverhältnis in den Brennräumen des Verbrennungsmotors derart anpasst, dass ein Katalysator in einer Abgasanlage des Verbrennungsmotors auf einem definierten Temperaturlevel gehalten wird.

Aus der DE 10 2004 033 394 B3 ist ein Verfahren zur Steuerung einer Brennkraftmaschine mit einer Motorsteuerung bekannt, welches die Abgastemperatur über das Luft-/Kraftstoffgemisch einstellt und die ein Temperaturmodell besitzt, das eine prädizierte Temperatur für ein Bauteil im Abgastrakt bestimmt, die sich bei Beibehaltung der aktuellen Betriebs- und Fahrbedingung nach einer längeren Zeitdauer einstellt. Dabei wird zum Bauteilschutz die Abgastemperatur abhängig von der prädizierten Temperatur geregelt.

US 2008 / 077 305 A1 beschreibt ein Kraftstoffeinspritzsystem und ein Verfahren zur Steuerung der Kraftstoffmengen für einen Verbrennungsmotor. Dabei wird das Verbrennungsluftverhältnis bei einer Boost-Anforderung an den Verbrennungsmotor angereichert, um eine Schädigung der Abgasnachbehandlungskomponenten durch zu hohe Abgastemperaturen zu vermeiden.

EP 1 432 897 A1 offenbart ein Verfahren zum Betreiben einer Brennkraftmaschine, insbesondere eines Kraftfahrzeuges, mit einer Abgasanlage mit Abgasreinigungssystem. Dabei wird ein Motorlambdawert in Abhängigkeit von einer modellierten oder gemessenen Temperatur an wenigstens einer kritischen Stelle der Abgasanlage derart vom Normalbetrieb abweichend auf einen temperaturabhängigen Motorlambdawert eingestellt, dass eine Abgastemperatur abgesenkt wird, wenn die ermittelte Temperatur an der wenigstens einen Stelle der Abgasanlage einen vorbestimmten ersten Temperaturwert überschreitet. Hierbei wird der Motorlambdawert erst dann zur Absenkung der Abgastemperatur vom Wert für den Normalbetrieb in einen temperaturabhängigen Motorlambdawert verändert, wenn die Messtemperatur den vorbestimmten ersten Temperaturwert für einen vorbestimmten Zeitraum überschritten hat.

Aus der DE 10 2016 123 251 A1 ist ein Verfahren zum Prüfen eines Motors mittels eines Motorenprüfstands und ein Motorenprüfstand bekannt. Gemäß dem Verfahren wird ein Regler verwendet, um eine Temperatur eines Abgases in einem Abgasstrang des Motors einzuregeln, wobei als Eingangsparameter des Reglers eine Ist-Temperatur des Abgases im Abgasstrang verwendet wird. Der Regler bestimmt in Abhängigkeit einer Soll-Temperatur des Abgases im Abgasstrang ein Luft-Kraftstoff-Verhältnis A eines für eine Verbrennung vorgesehenen Luft-Kraftstoffgemischs.

Der Erfindung liegt nun die Aufgabe zugrunde, bei einem Verbrennungsmotor den Restsauerstoffgehalt im Abgas zu verringern und somit die Abgasemissionen des Verbrennungsmotors zu senken.

Erfindungsgemäß wird diese Aufgabe durch ein Verfahren zum Betreiben eines Verbrennungsmotors mit mindestens einem Brennraum, dessen Einlass mit einem Ansaugtrakt und dessen Auslass mit einer Abgasanlage des Verbrennungsmotors verbunden ist, gelöst. Dabei ist an jedem Brennraum mindestens eine Zündquelle, insbesondere eine Zündkerze angeordnet, um ein Verbrennungsluftgemisch in dem jeweiligen Brennraum zu zünden. Der Verbrennungsmotor ist mittels eines Abgasturboladers aufgeladen, welcher eine in der Abgasanlage angeordnete Turbine umfasst, welche einen in dem Ansaugtrakt angeordneten Verdichter antreibt. Die Abgasanlage weist einen Abgaskanal auf, in welchem stromabwärts der Turbine mindestens ein Katalysator mit einer Drei-Wege-Funktion angeordnet ist. Stromaufwärts des Katalysators ist ein Abgassensor zur Erfassung einer Sauerstoffkonzentration im Abgasstrom des Verbrennungsmotors angeordnet. Die Abgasanlage ist über eine Niederdruck-Abgasrückführung mit dem Ansaugtrakt verbunden, welche stromabwärts der Turbine des Abgasturboladers aus dem Abgaskanal abzweigt und stromaufwärts des Verdichters in den Ansaugtrakt einmündet. In der Niederdruck-Abgasrückführung ist ein Kraftstoffinjektor angeordnet. Das erfindungsgemäße Verfahren umfasst folgende Schritte:
- Ermitteln eines Restsauerstoffgehalts in dem Abgasstrom des Verbrennungsmotors stromaufwärts des Katalysators,
- Ermitteln einer Lastanforderung an den Verbrennungsmotor,
- Einspritzen von Kraftstoff in die Niederdruck-Abgasrückführung, wenn der Restsauerstoffgehalt im Abgasstrom des Verbrennungsmotors über einem Schwellenwert liegt und die Lastanforderung einen Schwellenwert übersteigt, welcher eine unvollständige Umsetzung des in die Brennräume eingespritzten Kraftstoffs erwarten lässt.

Erfindungsgemäß ist vorgesehen, dass die Einspritzmenge in die Brennräume angepasst wird, wenn der Restsauerstoffgehalt im Abgasstrom des Verbrennungsmotors den Schwellenwert übersteigt. Durch die Einspritzung von Kraftstoff in die Niederdruck-Abgasrückführung ergibt sich eine weitere Variable bei der Auslegung des Brennverfahrens. Somit kann die in die Brennräume einzubringende Kraftstoffmenge auf die Direkteinspritzmenge und die in die Niederdruck-Abgasrückführung eingespritzte Kraftstoffmenge aufgeteilt werden. Dadurch wird eine verbesserte Verdampfung des Kraftstoffs aus der Direkteinspritzung erreicht und die Rohemissionen des Verbrennungsmotors können gesenkt werden.

Durch die Durchführung eines erfindungsgemäßen Verfahrens kann eine im Wesentlichen vollständige Ausnutzung des Sauerstoffs in den Brennräumen des Verbrennungsmotors erreicht werden, um einen möglichst geringen Restsauerstoffgehalt im Abgas zu erzielen. Dadurch kann die Sauerstoffmenge reduziert werden, welche zur exothermen Umsetzung von unverbrannten oder teilverbrannten Kraftstoffkomponenten auf dem Katalysator zur Verfügung steht. Um dies zu erreichen, muss das Verbrennungsluftgemisch in den Brennräumen möglichst homogen sein. Im Bereich der Volllast ist die Zeitspanne für die Verdampfung des Kraftstoffs bei einem direkteinspritzenden Verbrennungsmotor mit hoher spezifischer Leistung jedoch relativ kurz. Daher wird ein Teil des benötigten Kraftstoffs bereits in die Niederdruck-Abgasrückführung eingespritzt, sodass ein längerer Zeitraum für die Verdampfung des Kraftstoffs und die Homogenisierung des Verbrennungsluftgemischs zur Verfügung steht. Dadurch wird insbesondere bei großen Einspritzmengen, welche sonst nur durch die Direkteinspritzung in die Brennräume eingebracht werden, die Gemischbildung in den Brennräumen entlastet, sodass sich weniger unterstöchiometrische Zonen ausbilden. Durch die verbesserte Homogenisierung ist ein verbesserter Ausbrand des Verbrennungsluftgemischs möglich. Dies reduziert den Anteil an unverbrannten Kohlenwasserstoffen und an Rußpartikeln und führt zu einem niedrigen Restsauerstoffgehalt im Abgas. Somit wird der Anteil des freien Sauerstoffs vor Eintritt in den Katalysator reduziert, was sich positiv auf das gesamte Konvertierungsverhalten auswirkt und die Temperatur des Katalysators senkt. Dadurch kann eine thermische Schädigung oder eine vorzeitige Alterung des Katalysators vermieden werden. Zudem können durch den geringeren Restsauerstoffgehalt die Stickoxidemissionen des Verbrennungsmotors minimiert werden.

Durch die in den abhängigen Ansprüchen aufgeführten zusätzlichen Merkmale sind Verbesserungen und nicht triviale Weiterentwicklungen des im unabhängigen Anspruch angegebenen Verfahrens zum Betreiben eines Verbrennungsmotors möglich.

Besonders bevorzugt ist dabei, wenn die in die Brennräume des Verbrennungsmotors eingespritzte Kraftstoffmenge unterproportional zur Lasterhöhung angehoben wird und gleichzeitig die in die Niederdruck-Abgasrückführung eingespritzte Kraftstoffmenge erhöht wird. Dadurch wird vermieden, dass unverdampfter Kraftstoff die Brennräume auskühlt, wodurch die Flammenfront vor Erreichen der Brennraumwand erlischt und somit zu einer erhöhten Emission an unverbrannten Kohlenwasserstoffen und einem gleichzeitig erhöhten Restsauerstoffgehalt im Abgas führt. Ferner kann die Gefahr verringert werden, dass unverdampfter Kraftstoff mit der Flammenfront in den Brennräumen in Kontakt kommt und zu erhöhten Partikelemissionen führt. Alternativ oder zusätzlich ist vorgesehen, dass ein Einspritzzeitpunkt für die Kraftstoffeinspritzung in die Brennräume des Verbrennungsmotors angepasst wird.

Durch die geringere Menge an Kraftstoff, welche über die Direkteinspritzung in die Brennräume zur Verfügung gestellt werden muss, kann der Einspritzzeitpunkt angepasst und/oder die Einspritzzeit verkürzt werden. Dadurch ist es möglich, den Kraftstoff in einem wärmeren Brennraum einzubringen, wodurch die Verdampfung des Kraftstoffs verbessert wird.

Besonders bevorzugt ist dabei, wenn der Einspritzzeitpunkt für die Kraftstoffeinspritzung in Richtung "spät" verschoben wird. Durch eine Verschiebung des Einspritzzeitpunktes in Richtung "spät" wird der Kraftstoff in bereits stärker komprimierte und damit wärmere Luft eingebracht, was das Verdampfen des Kraftstoffs begünstigt. Zudem kühlen die Brennräume beim Verdampfen nicht mehr so stark aus, sodass die Flammenfront näher an die Brennraumwände gelangt. Somit wird die Verbrennung optimiert, der thermische Wirkungsgrad des Verbrennungsmotors erhöht und der Restsauerstoffgehalt im Abgas abgesenkt.

Alternativ oder zusätzlich ist mit Vorteil vorgesehen, dass ein Zündzeitpunkt für ein Kraftstoff-Luft-Gemisch in den Brennräumen des Verbrennungsmotors angepasst wird. Neben der Abgasrückführung kann die Abgastemperatur auch durch andere motorische Parameter beeinflusst werden. So führt beispielsweise eine Spätverstellung des Zündzeitpunktes in den Brennräumen bei konstant gehaltenem Lastpunkt zu einer Erhöhung der Abgastemperatur bei einer gleichzeitigen Erhöhung des Abgasmassenstroms, da der thermische Wirkungsgrad des Verbrennungsmotors bei einer Verstellung des Zündzeitpunktes in Richtung "spät" abnimmt. Kombiniert man verfahrenstechnisch die Effekte der Kraftstoffeinspritzung in die Niederdruck-Abgasrückführung mit denen einer Zündwinkelverstellung, so kann bei dynamischen Lastpunkten einer verbesserte Verbrennung in den Brennräumen erreicht werden, wodurch weniger Restsauerstoff aus den Brennräumen in die Abgasanlage gelangt. Dadurch wird insbesondere bei Hochlastpunkten verhindert, dass der Katalysator zusätzlich zum heißen Abgas durch eine verstärkte exotherme Umsetzung von unverbrannten oder teilverbrannten Kraftstoffkomponenten mit dem Restsauerstoff aufgeheizt und thermisch geschädigt wird.

In einer weiteren Verbesserung des Verfahrens ist vorgesehen, dass zusätzlich eine Kraftstoffeinspritzung in den Ansaugtrakt des Verbrennungsmotors erfolgt. Um die Kraftstoffmenge bei dynamischen Lasterhöhungen oder bei Volllast zu vergrößern, kann zusätzlich zu einer Einspritzung in die Niederdruck-Abgasrückführung und in die Brennräume des Verbrennungsmotors eine Einspritzung in den Ansaugtrakt des Verbrennungsmotors erfolgen. Allerdings ist die Strecke für die Verdunstung des Kraftstoffes kürzer als über die Niederdruck-Abgasrückführung. Durch eine geschickte Anordnung der Saugstrecke und des Abgasrückführungsventils der Niederdruck-Abgasrückführung kann bei einem schlagartigen Übergang in den Schub der noch in der Abgasrückführungsstrecke befindliche Kraftstoff zurückgehalten werden, sodass der kurzzeitig notwendige gefeuerte Schubbetrieb ungefähr die gleichen Verluste einer zusätzlichen Saugrohreinspritzung bedingt.

In einer weiteren Verbesserung des Verfahrens ist vorgesehen, dass eine Brennraumtemperatur und/oder eine Abgastemperatur ermittelt wird, wobei die Abgasrückführungsrate der Abgasrückführung erhöht wird, wenn die Brennraumtemperatur oder die Abgastemperatur jeweils einen definierten Schwellenwert übersteigt. Somit lassen sich mithilfe einer über die Abgastemperatur oder die Brennraumtemperatur gesteuerten oder geregelten Abgasrückführung Abgastemperaturen einstellen, welche funktionssicher die maximal zulässige Bauteiltemperatur der Abgasnachbehandlungskomponenten nicht überschreiten. Ferner kann die über die Niederdruck-Abgasrückführung eingespritzte Kraftstoffmenge angepasst werden, um bei Betriebspunkten mit hoher Leistungsanforderung die Verbrennung in den Brennräumen zu optimieren und den Restsauerstoffgehalt in den Brennräumen zu minimieren.

In einer bevorzugten Ausführungsvariante des Verfahrens ist vorgesehen, dass eine Abgastemperatur des Verbrennungsmotors konstant gehalten wird, indem die Abgasrückführungsrate und/oder der Zündzeitpunkt des Verbrennungsgemischs und/oder die in die Niederdruck-Abgasrückführung eingespritzte Kraftstoffmenge angepasst werden. Durch eine konstante Abgastemperatur können beispielsweise die Katalysatoren an einem maximaleffizienten Betriebspunkt betrieben werden, sodass eine besonders effiziente Konvertierung der im Abgasstrom des Verbrennungsmotors vorhandenen Schadstoffe möglich ist. Alternativ kann eine konstante Abgastemperatur notwendig sein, um einen Ottopartikelfilter oder einen Vier-Wege-Katalysator zu regenerieren. Dabei kann eine Temperatur eingestellt werden, welche oberhalb oder unterhalb derjenigen Temperatur liegt, welche sich bei einem maximal effizienten oder emissionsoptimalen Betriebspunkt des Verbrennungsmotors einstellen würde.

Erfindungsgemäß wird ein Verbrennungsmotor mit mindestens einem Brennraum, dessen Einlass mit einem Ansaugtrakt und dessen Auslass mit einer Abgasanlage des Verbrennungsmotors verbunden sind, vorgeschlagen, wobei an jedem Brennraum mindestens eine Zündeinrichtung angeordnet ist, um ein Verbrennungsluftgemisch in dem Brennraum zu zünden. Dabei ist der Verbrennungsmotor mittels eines Abgasturboladers aufgeladen, welcher eine in der Abgasanlage angeordnete Turbine umfasst, die einen in dem Ansaugtrakt angeordneten Verdichter antreibt. Dabei ist in der Abgasanlage stromabwärts der Turbine mindestens ein Katalysator mit einer Drei-Wege-Funktion angeordnet. Stromaufwärts des Katalysators ist in der Abgasanlage ein Abgassensor zur Erfassung einer Sauerstoffkonzentration im Abgas des Verbrennungsmotors angeordnet. Die Abgasanlage ist über eine Niederdruck-Abgasrückführung, welche stromabwärts der Turbine aus der Abgasanlage abzweigt mit dem Ansaugtrakt stromaufwärts des Verdichters verbunden. In der Niederdruck-Abgasrückführung ist ein Kraftstoffinjektor angeordnet. Dem Verbrennungsmotor ist ein Motorsteuergerät zugeordnet, mit welchem ein erfindungsgemäßes Verfahren ausgeführt wird, wenn ein maschinenlesbarer Programmcode durch das Motorsteuergerät ausgeführt wird. Durch einen erfindungsgemäßen Verbrennungsmotor kann auch bei Volllast ein stöchiometrisches Verbrennungsluftverhältnis in den Brennräumen realisiert werden, ohne dass die Abgasnachbehandlungskomponenten, insbesondere ein motornaher Drei-Wege-Katalysator oder Vier-Wege-Katalysator, thermisch geschädigt werden. Zudem wird die Alterung dieser Abgasnachbehandlungskomponenten verringert, da weniger unverbrannte oder teilverbrannte Abgaskomponenten exotherm auf der katalytisch wirksamen Oberfläche der Abgasnachbehandlungskomponenten umgesetzt werden. Dies ermöglicht an sämtlichen Betriebspunkten des Verbrennungsmotors eine optimale Abgasnachbehandlung und somit minimale Emissionen.

In einer bevorzugten Ausführungsform des Verbrennungsmotors ist vorgesehen, dass der Katalysator als ein Drei-Wege-Katalysator oder ein Vier-Wege-Katalysator ausgeführt ist. Durch einen Drei-Wege-Katalysator können sowohl unverbrannte Kohlenwasserstoffe, Wasserstoff und Kohlenmonoxid oxidiert als auch Stickoxide reduziert werden. Dies führt zu einer besonders effiziente Konvertierung der im Abgasstrom des Verbrennungsmotors enthaltenen Schadstoffe. Durch einen Vier-Wege-Katalysator können zusätzlich Rußpartikel aus dem Abgasstrom entfernt werden, wodurch zusätzliche Filtermaßnahmen in der Niederdruck-Abgasrückführung zum Schutze des Abgasrückführungsventils oder des Verdichters des Abgasturboladers entfallen können.

In einer bevorzugten Ausführung der Erfindung ist vorgesehen, dass der Verbrennungsmotor als direkteinspritzender Ottomotor ausgeführt ist. Direkteinspritzende Ottomotoren bieten prinzipbedingt einen vergleichsweise geringen Zeitraum für die Verdampfung des in die Brennräume eingebrachten Kraftstoffs. Gerade bei hohen spezifischen Leistungen mit entsprechend hohen Kraftstoffmengen und hohen Drehzahlen ist der Zeitraum für die Verdunstung des Kraftstoffes sehr knapp. Daher ist das vorgeschlagene Verfahren bei direkteinspritzenden Ottomotoren besonders vorteilhaft.

In einer vorteilhaften Ausführungsform des Verbrennungsmotors ist vorgesehen, dass der Kraftstoffinjektor in der Niederdruck-Abgasrückführung stromaufwärts eines Abgasrückführungskühlers angeordnet ist. Durch eine Eindosierung des Kraftstoffs in die Niederdruckabgasrückführung wird eine besonders lange Wegstrecke für die Verdampfung des Kraftstoffs zur Verfügung gestellt. Zudem ist das Abgas an dieser Stelle vergleichsweise heiß, was die Verdampfung des Kraftstoffs zusätzlich begünstigt.

Alternativ ist vorgesehen, dass der Kraftstoffinjektor stromabwärts des Abgasrückführungskühlers angeordnet ist. Durch einen Kraftstoffinjektor stromabwärts des Abgasrückführungskühlers wird die Ansaugluft bei der Verdunstung des Kraftstoffs abgekühlt. Dies kann zu einer verbesserten Füllung der Brennräume und somit zu einer höheren Leistungsausbeute oder einem verbesserten thermischen Wirkungsgrad führen.

In einer alternativen Ausführungsform ist vorgesehen, dass der Kraftstoffinjektor in der Niederdruck-Abgasrückführung stromabwärts eines ersten Abgasrückführungskühlers und stromaufwärts eines zweiten Abgasrückführungskühlers angeordnet ist oder in einen Abgasrückführungskühler integriert ist. Durch eine Integration des Kraftstoffinjektors in den Abgasrückführungskühler kann eine Baugruppe gebildet werden, welche vormontiert wird. Dies kann die Montagezeit bei der Montage des Abgassystems verkürzen.

In einer weiteren Verbesserung des Verbrennungsmotors ist vorgesehen, dass im Abgaskanal stromaufwärts eines Drei-Wege-Katalysators oder stromaufwärts eines Vier-Wege-Katalysators eine Lambdasonde, insbesondere eine Breitband-Lambdasonde angeordnet ist, mit welcher ein stöchiometrisches Verbrennungsluftverhältnis in den Brennräumen eingeregelt wird. Dadurch kann das Verbrennungsluftverhältnis auf ein im Mittel stöchiometrisches Verbrennungsluftverhältnis eingeregelt werden, sodass eine maximaleffiziente Abgasnachbehandlung des Abgasstroms durch die Abgasnachbehandlungskomponenten möglich ist.

In einer vorteilhaften Weiterentwicklung des Verbrennungsmotors ist vorgesehen, dass in der Abgasrückführung ein Abgasrückführungsfilter und/oder ein Abgasrückführungskatalysator angeordnet ist. Durch einen Abgasrückführungsfilter kann verhindert werden, dass Rußpartikel oder sonstige Partikel über die Abgasrückführung in den Ansaugtrakt gelangen und dort den Verdichter des Abgasturboladers beschädigen. Durch einen Abgasrückführungskatalysator kann verhindert werden, dass neben den gewünschten Abgaskomponenten, insbesondere Kohlenstoffdioxid, auch weitere Abgaskomponenten in den Ansaugtrakt gelangen, welche die Rohemissionen des Verbrennungsmotors erhöhen würden. Zudem kann die Klopfneigung bei der Verbrennung des Kraftstoffluftgemischs in den Brennräumen des Verbrennungsmotors reduziert werden, wobei das Kraftstoffluftgemisch durch die Abgasrückführung eine Inertisierung erfährt und dadurch die Neigung zur Selbstentzündung verringert wird. Somit können die Emissionen des Verbrennungsmotors insbesondere dann nochmals verringert werden, wenn die Abgasrückführung stromaufwärts des Drei-Wege-Katalysators oder des Vier-Wege-Katalysators aus dem Abgaskanal abzweigt.

In einer vorteilhaften Ausführungsform des Abgasnachbehandlungssystems ist vorgesehen, dass in der Abgasanlage mindestens ein Abgassensor angeordnet ist. Durch einen Abgassensor kann die Abgaszusammensetzung oder die Konzentration zumindest eines im Abgasstrom des Verbrennungsmotors vorhandenen Schadstoffs ermittelt werden. Dabei kann insbesondere die Konzentration von Stickoxiden, Kohlenwasserstoffen oder Kohlenmonoxid im Abgas ermittelt werden. Die Ergebnisse des Abgassensors werden an das Motorsteuergerät des Verbrennungsmotors übertragen und können dort genutzt werden, um die Abgasnachbehandlung zu optimieren.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den verschiedenen Figuren mit gleichen Bezugszeichen gekennzeichnet. Es zeigen:
- Figur 1: ein bevorzugtes Ausführungsbeispiel eines schematisch dargestellten Verbrennungsmotors mit einem Ansaugtrakt und einer Abgasanlage zur Durchführung eines erfindungsgemäßen Verfahrens zur Abgasnachbehandlung;
- Figur 2: ein weiteres Ausführungsbeispiel eines erfindungsgemäßen Verbrennungsmotors;
- Figur 3: ein alternatives Ausführungsbeispiel eines erfindungsgemäßen Verbrennungsmotors, wobei der Kraftstoffinjektor in der Niederdruckabgasrückführung stromabwärts eines ersten Abgasrückführungskühlers und stromaufwärts eines zweiten Abgasrückführungskühlers angeordnet ist;
- Figur 4: ein weiteres alternatives Ausführungsbeispiel eines erfindungsgemäßen Verbrennungsmotors, wobei der Kraftstoffinjektor in der Niederdruck-Abgasrückführung in den Abgasrückführungskühler integriert ist;
- Figur 5: ein Diagramm, bei dem der Restsauerstoff im Abgaskanal in Abhängigkeit der in die Niederdruck-Abgasrückführung eingebrachten Kraftstoffmenge dargestellt ist; und
- Figur 6: ein Ablaufdiagramm zur Durchführung eines erfindungsgemäßen Verfahrens zum Betreiben eines Verbrennungsmotors.

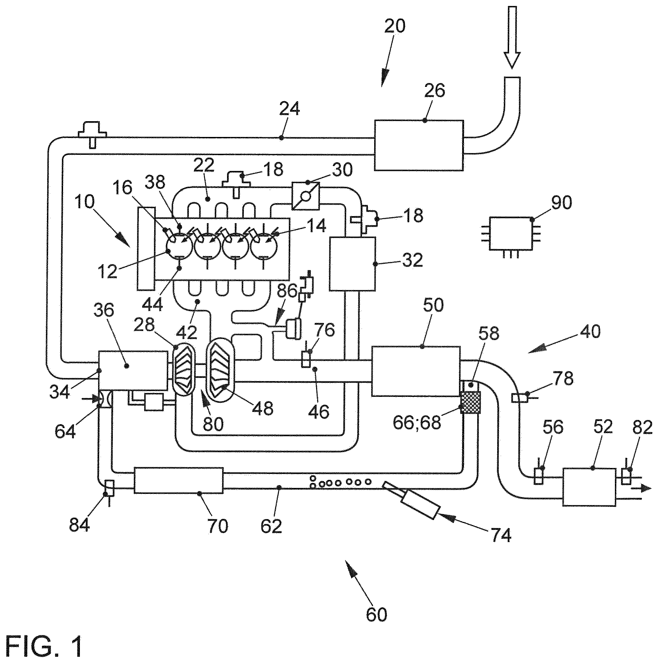

Figur 1 zeigt die schematische Darstellung eines Verbrennungsmotors 10 mit einem Ansaugtrakt 20 und einer Abgasanlage 40. Der Verbrennungsmotor 10 ist als ein direkteinspritzender Ottomotor ausgeführt und weist mehrere Brennräume 12 auf. An den Brennräumen 12 ist jeweils ein Kraftstoffinjektor 16 zur Einspritzung eines Kraftstoffs in den jeweiligen Brennraum 12 und jeweils eine Zündkerze 14 zur Zündung eines Kraftstoff-Luft-Gemischs angeordnet. Der Brennraum 12 wird durch einen Kolben begrenzt, welcher in einer Zylinderbohrung des Verbrennungsmotors 10 linear verschiebbar angeordnet ist. Der Kolben ist über einen Pleuel mit einer Kurbelwelle des Verbrennungsmotors 10 verbunden, welche die Leistung des Verbrennungsmotors 10 auf eine mit einem Getriebe verbindbare Abtriebswelle überträgt. Der Verbrennungsmotor 10 ist mit seinem Einlass 22 mit einem Ansaugtrakt 20 und mit seinem Auslass 42 mit einer Abgasanlage 40 verbunden. An den Brennräumen 12 sind Einlassventile 38 und Auslassventile 44 angeordnet, mit welchen eine fluidische Verbindung vom Ansaugtrakt 20 zu den Brennräumen 12 oder von den Brennräumen 12 zur Abgasanlage 40 geöffnet oder verschlossen werden kann.

Der Ansaugtrakt 20 umfasst einen Ansaugkanal 24, in welchem in Strömungsrichtung von Frischluft durch den Ansaugkanal 24 ein Luftfilter 26, stromabwärts des Luftfilters 26 ein Verdichter 28 eines Abgasturboladers 80, stromabwärts des Verdichters 28 ein Ladeluftkühler 32 und stromabwärts des Ladeluftkühlers 32 eine Drosselklappe 30 angeordnet sind. Zusätzlich kann im Ansaugtrakt 20 ein Luftmassenmesser oder ein weiterer Sensor 18 angeordnet sein, um die den Brennräumen 12 des Verbrennungsmotors 10 zugeführte Luftmenge zu bestimmen. Dabei kann der Luftmassenmesser oder der Sensor 18 auch in einem Filtergehäuse des Luftfilters 26 integriert sein, sodass der Luftfilter 26 und der Luftmassenmesser oder der Sensor 18 eine Baugruppe ausbilden. Stromabwärts des Luftfilters 26 und stromaufwärts des Verdichters 28 ist eine Einmündung 34 vorgesehen, an welcher eine Abgasrückführungsleitung 62 einer Niederdruck-Abgasrückführung 60 in den Ansaugkanal 24 mündet. Alternativ oder zusätzlich zu einem Kraftstoffinjektor 16, welcher den Kraftstoff direkt in die Brennräume 12 des Verbrennungsmotors 10 einspritzt, kann auch eine Einspritzung von Kraftstoff in den Ansaugtrakt 20 erfolgen. Ferner ist im Ansaugtrakt 20 stromabwärts der Einmündung 34 und stromaufwärts des Verdichters 28 ein Mischer 36 vorgesehen, in welchem sich der zurückgeführte Abgasstrom aus der Niederdruck-Abgasrückführung 60 mit der Frischluft aus dem Ansaugkanal 24 vermischt.

Die Abgasanlage 40 umfasst einen Abgaskanal 46, in welchem in Strömungsrichtung eines Abgases des Verbrennungsmotors 10 durch den Abgaskanal 46 eine Turbine 48 des Abgasturboladers 80 angeordnet ist, welche den Verdichter 28 im Ansaugtrakt 20 über eine Welle antreibt. Der Abgasturbolader 80 kann als Abgasturbolader 80 mit variabler Turbinengeometrie ausgeführt sein. Dazu sind einem Turbinenrad der Turbine 48 verstellbare Leitschaufeln vorgeschaltet, über welche die Anströmung des Abgases auf die Schaufeln der Turbine 48 variiert werden kann. Der Abgasturbolader 80 kann aber auch mit einem Waste-Gate 86 anstelle der variablen Turbinengeometrie ausgestattet sein, mit welchem ein Abgasstrom des Verbrennungsmotors 10 an der Turbine 48 vorbei in den Abgaskanal 46 geleitet werden kann, um den Betriebspunkt des Abgasturboladers 80 optimal einzustellen und den Abgasturbolader 80 vor Schäden zu bewahren, oder eine Kombination aus variabler Turbinengeometrie und Waste-Gate 86 aufweisen. Stromabwärts der Turbine 48 ist mindestens eine Abgasnachbehandlungskomponente 50, 52, 54 im Abgaskanal 46 des Verbrennungsmotors 10 angeordnet. Dabei ist in dem in Figur 1 dargestellten Ausführungsbeispiel unmittelbar stromabwärts der Turbine 48 des Abgasturboladers 80 als erste Komponente der Abgasnachbehandlung ein Drei-Wege-Katalysator 50 angeordnet. Stromabwärts des Drei-Wege-Katalysators 50 zweigt an einer Verzweigung 58 eine Niederdruck-Abgasrückführung 60 aus dem Abgaskanal 46 ab und verbindet den Abgaskanal 46 mit dem Ansaugkanal 24 stromabwärts des Luftfilters 26 und stromaufwärts des Verdichters 28 des Abgasturboladers 80. Stromabwärts der Verzweigung 58 kann eine Abgasklappe vorgesehen sein, um die Abgasrückführungsrate durch die Niederdruck-Abgasrückführung 60 zu steuern. Stromabwärts der Verzweigung 58 kann eine weitere Abgasnachbehandlungskomponente 52, 54, insbesondere ein Vier-Wege-Katalysator 52 oder ein Ottopartikelfilter 54 angeordnet sein.

Die Niederdruck-Abgasrückführung 60 umfasst neben der Abgasrückführungsleitung 62 einen Abgasrückführungskühler 70 und ein Abgasrückführungsventil 64, über welches die Abgasrückführung durch die Abgasrückführungsleitung 62 steuerbar ist. In dem Abgaskanal 46 kann eine Abgastemperatur T_{EG} durch einen Temperatursensor 82 erfasst werden oder durch das Motorsteuergerät 90 berechnet werden, um die Niederdruck-Abgasrückführung 60 zu aktivieren, sobald die Abgastemperatur T_{EG} einen definierten Schwellenwert überschritten hat. An der Abgasrückführungsleitung 62 der Abgasrückführung 60 kann ein weiterer Temperatursensor 84 vorgesehen werden, um die Temperatur des zurückgeführten Abgases stromabwärts des Abgasrückführungskühlers 70 zu ermitteln. Dadurch kann vermieden werden, dass das zurückgeführte Abgas so stark gekühlt wird, dass der Taupunkt unterschritten wird und es zu einem Auskondensieren von Wassertropfen in der Abgasrückführungsleitung 62 kommt. Somit kann verhindert werden, dass Wasserdampf oder im Abgas enthaltene Gaskomponenten auskondensieren und in der Niederdruck-Abgasrückführung 60 oder im Ansaugtrakt 20 zu Beschädigungen oder Ablagerungen führen. Der Abgasrückführungskühler 70 ist vorzugsweise als Kreuzstrom-, Gegenstrom- oder Parallelstrom-Wärmetauscher 72 ausgeführt und ist mit dem Kühlmittelkreislauf des Verbrennungsmotors 10 verbunden. Ferner ist in der Niederdruck-Abgasrückführung 60 ein Kraftstoffinjektor 74 angeordnet, mit welchem ein Kraftstoff zum Betreiben des Verbrennungsmotors 10 in den zurückgeführten Abgasstrom eingebracht werden kann. Ferner können in der Niederdruck-Abgasrückführung 60 ein Abgasrückführungsfilter 66 und/oder ein Abgasrückführungskatalysator 68 angeordnet sein, um das zurückgeführte Abgas entsprechend nachzubehandeln.

In der Abgasanlage 40 ist stromabwärts der Turbine 48 des Abgasturboladers 80 und stromaufwärts des Drei-Wege-Katalysators 50 eine erste Lambdasonde 76, insbesondere eine Breitbandsonde angeordnet, um das Verbrennungsluftverhältnis λ_{E} des Verbrennungsmotors 10 zu regeln. Dazu ist die erste Lambdasonde 76 mit einem Motorsteuergerät 90 des Verbrennungsmotors 10 verbunden, über welches u.a. die Einspritzmenge an Kraftstoff in die Brennräume 12 und in die Niederdruck-Abgasrückführung 60, der Zündzeitpunkt sowie die Stellung der Drosselklappe 30 gesteuert werden. Stromabwärts der Verzweigung 58 und stromaufwärts der weiteren Abgasnachbehandlungskomponente 52, 54 ist eine weitere Lambdasonde 78, insbesondere eine Sprungsonde angeordnet, um den Sauerstoffgehalt stromabwärts des Katalysators 50 zu ermitteln. Ferner kann im Abgaskanal 46 ein weiterer Abgassensor 56 und/oder ein Temperatursensor 82 vorgesehen sein.

Im Fahrbetrieb eines Kraftfahrzeuges wird der Verbrennungsmotor 10 mit einem stöchiometrischen Verbrennungsluftverhältnis betrieben. Steigt die Brennraumtemperatur T_{CC} oder die Abgastemperatur T_{EG} aufgrund einer hohen Leistungsanforderung an den Verbrennungsmotor 10 über einen kritischen Schwellenwert an, so wird aus Gründen des thermischen Bauteilschutzes die Abgasrückführungsrate erhöht, um die Temperatur im Brennraum 12 und in der Abgasanlage 40 zu senken. Dabei wird mittels des Kraftstoffinjektors 74 Kraftstoff in die Niederdruck-Abgasrückführung 60 eingespritzt. Der eingespritzte Kraftstoff verdampft und vermischt sich in dem Mischer 36 mit der Frischluft. Das Kraftstoff-Luft-Gemisch wird den Brennräumen 12 des Verbrennungsmotors 10 zugeführt, wobei durch die Kraftstoffinjektoren 16 zusätzlicher Kraftstoff in die Brennräume 12 eingespritzt wird. Dadurch kann in allen Betriebszuständen, insbesondere bei einer dynamischen Leistungsanforderung oder einem Volllastbetrieb auf eine Anreicherung verzichtet werden und der Verbrennungsmotor 10 mit einem stöchiometrischen Verbrennungsluftverhältnis betrieben werden.

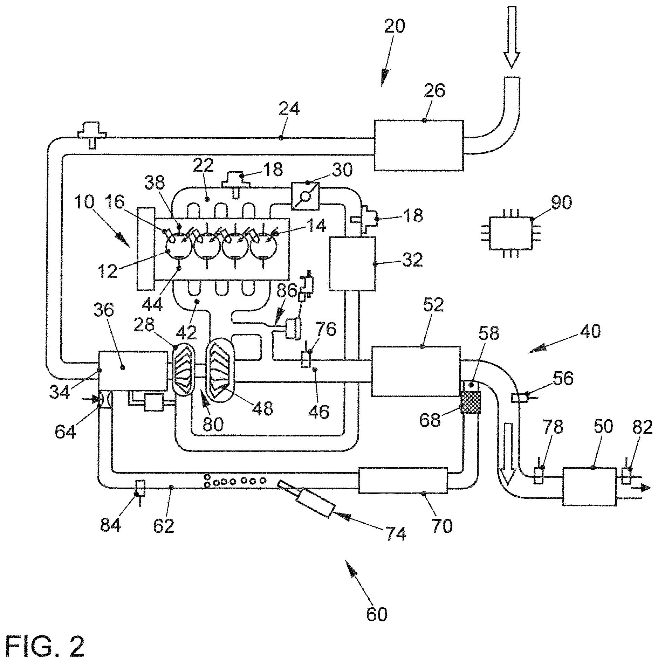

In Figur 2 ist ein alternatives Ausführungsbeispiel eines erfindungsgemäßen Verbrennungsmotors 10 dargestellt. Bei im Wesentlichen gleichem Aufbau wie zu Figur 1 ausgeführt, ist der Kraftstoffinjektor 74 in der Niederdruck-Abgasrückführung 60 in diesem Ausführungsbeispiel stromabwärts des Abgasrückführungskühlers 70 angeordnet. Zudem sind der motornahe Katalysator 50, 52 in diesem Ausführungsbeispiel als Vier-Wege-Katalysator 52 und die zweite Abgasnachbehandlungskomponente als Drei-Wege-Katalysator 50 ausgeführt. Alternativ kann auch in diesem Ausführungsbeispiel der motornahe erste Katalysator als Drei-Wege-Katalysator 50 ausgeführt sein, welchem ein Vier-Wege-Katalysator 52 oder ein Ottopartikelfilter 54 nachgeschaltet ist

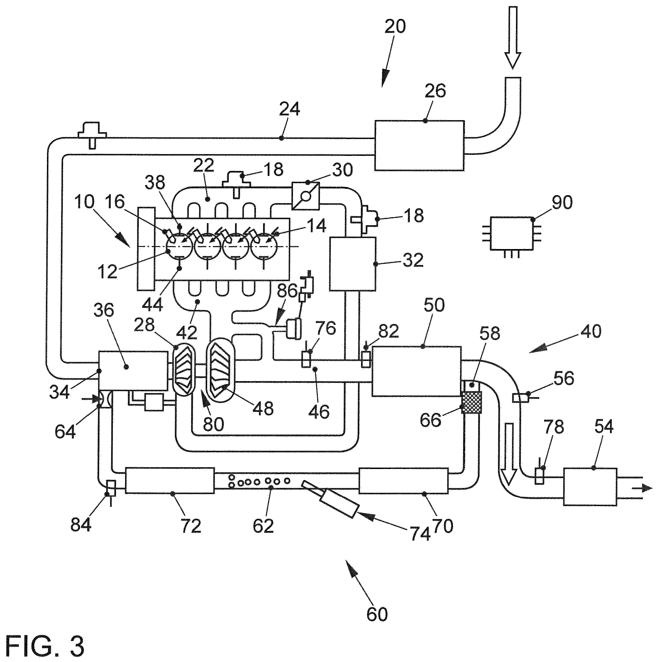

In Figur 3 ist ein weiteres Ausführungsbeispiel eines Verbrennungsmotors 10 mit einem Ansaugtrakt 20 und einer Abgasanlage 40 dargestellt. Bei im Wesentlichen gleichem Aufbau wie zu Figur 1 und Figur 2 ausgeführt, weist die Niederdruck-Abgasrückführung 60 in diesem Ausführungsbeispiel einen ersten Abgasrückführungskühler 70 und einen zweiten Abgasrückführungskühler 72 auf, wobei der Kraftstoffinjektor 74 stromabwärts des ersten Abgasrückführungskühlers 70 und stromaufwärts des zweiten Abgasrückführungskühlers 72 angeordnet ist.

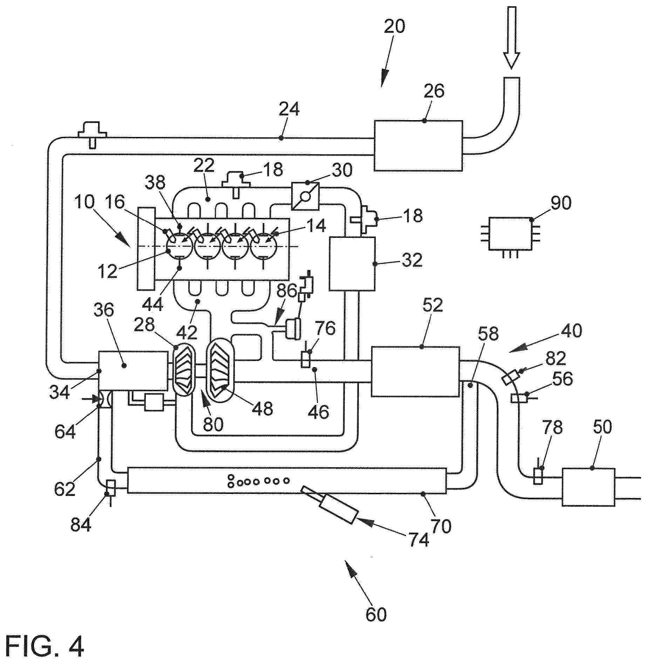

In Figur 4 ist ein weiteres Ausführungsbeispiel eines Verbrennungsmotors 10 mit einem Ansaugtrakt 20 und einer Abgasanlage 40 dargestellt. Bei im Wesentlichen gleichem Aufbau wie zu Figur 1 - 3 ausgeführt, ist in diesem Ausführungsbeispiel der Kraftstoffinjektor 74 in der Niederdruck-Abgasrückführung 60 in den Abgasrückführungskühler 70 integriert. Dadurch können der Abgasrückführungskühler 70 und der Kraftstoffinjektor 74 als Baugruppe ausgeführt werden, was die Montage der Abgasanlage 40 vereinfacht.

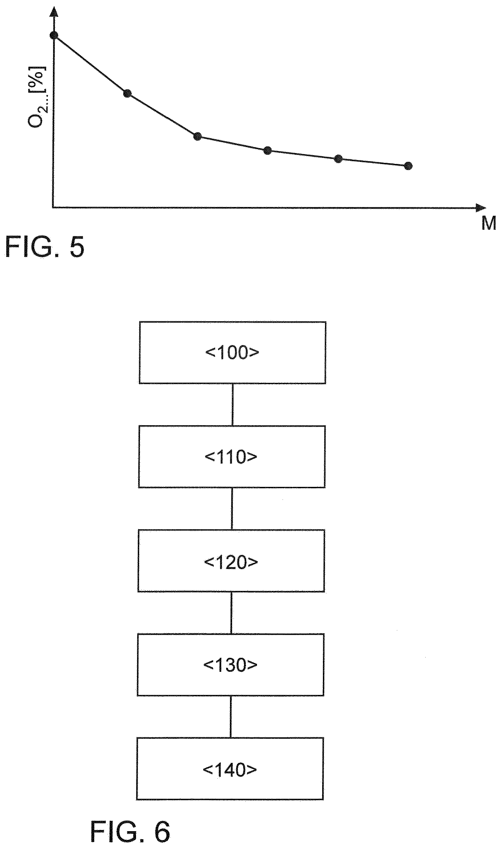

In Figur 5 ist ein Diagramm dargestellt, welches den Restsauerstoffgehalt im Abgaskanal 46 stromaufwärts des Katalysators 50 in Abhängigkeit von der in die Niederdruck-Abgasrückführung eingespritzten Kraftstoffmenge darstellt. Es ist zu erkennen, dass eine Kraftstoffeinspritzung in die Niederdruck-Abgasrückführung 60 zu einer signifikanten Reduzierung des Restsauerstoffgehalts im Abgaskanal 46 führt. Dieser Effekt kann insbesondere im Bereich der Volllast dazu genutzt werden, die Verbrennung des Kraftstoffs in den Brennräumen 12 zu optimieren und somit weniger unverbrannten Kohlenwasserstoff und Restsauerstoff in den Abgaskanal 46 einzubringen, welche exotherm auf der katalytisch wirksamen Oberfläche des Katalysators 50 umgesetzt werden und somit zu einer starken Erwärmung des Katalysators 50 führen. Somit kann durch ein erfindungsgemäßes Verfahren die thermische Belastung des Katalysators 50 insbesondere bei Hochlastpunkten reduziert werden.

In Figur 6 ist ein Ablaufdiagramm zur Durchführung eines erfindungsgemäßen Verfahrens zum Betreiben eines Verbrennungsmotors 10 dargestellt. In einem ersten Verfahrensschritt <100> wird der Verbrennungsmotor 10 mit einem stöchiometrischen Verbrennungsluftverhältnis λ_{E} = 1 betrieben. Dabei wird in einem Verfahrensschritt <110> der Restsauerstoffgehalt im Abgasstrom des Verbrennungsmotors 10 an der ersten Lambdasonde 76 stromaufwärts des Katalysators 50 erfasst. Steigt die Lastanforderung P an den Verbrennungsmotor 10 über einen Schwellenwert P_{S} oder der Restsauerstoffgehalt im Abgasstrom über einen Schwellenwert λ_{S}, so wird in einem Verfahrensschritt <120> Kraftstoff in die Niederdruck-Abgasrückführung 60 eingespritzt. Dieser Kraftstoff verdampft in der Niederdruck-Abgasrückführung 60 und vermischt sich im Mischer 36 mit der Ansaugluft des Verbrennungsmotors 10. Dabei wird die Einspritzmenge des über die Kraftstoffinjektoren 16 direkt in die Brennräume 12 eingespritzten Kraftstoffs in einem Verfahrensschritt <130> entsprechend angepasst. Durch die kombinierte Einspritzung von Kraftstoff in die Niederdruck-Abgasrückführung 60 und die Brennräume 12 kann die insgesamt eingebrachte Kraftstoffmenge erhöht werden, wobei die Gefahr reduziert wird, dass unverdampfter Kraftstoff mit der Flammenfront in dem Brennraum 12 in Kontakt kommt. Dadurch können die bei der Verbrennung entstehenden Rußpartikel minimiert werden. Ferner kann eine Abkühlung der Brennräume 12 durch eine geringere Verdunstung von Kraftstoff in den Brennräumen 12 minimiert werden, wodurch ein verbessertes Ausbrennen des im Brennraum befindlichen Verbrennungsluftgemischs erreicht wird. Dadurch können die Rohemissionen an unverbrannten oder teilverbrannten Kraftstoffkomponenten, insbesondere an unverbrannten Kohlenwasserstoffen und Kohlenmonoxid sowie der Restsauerstoffgehalt des Abgases verringert werden. Dies führt zu einem verbesserten Wirkungsgrad des Verbrennungsmotors 10, welcher zu einer höheren nutzbaren Leistung oder einem geringeren Kraftstoffverbrauch im Hochlastbereich führt. Ferner muss der Partikelfilter 54 oder der Vier-Wege-Katalysator 52 seltener regeneriert werden, wodurch der Kraftstoffverbrauch des Verbrennungsmotors 10 reduziert werden kann. Durch den geringeren Restsauerstoffgehalt im Abgas ist zudem die Reduzierung der Stickoxidemissionen möglich. Wird die Lastanforderung P wieder reduziert und/oder sinkt der Restsauerstoffgehalt im Abgas wieder unter den Schwellenwert λ_{S}, wird in einem Verfahrensschritt <140> die Kraftstoffeinspritzung in die Niederdruck-Abgasrückführung 60 wieder deaktiviert und der Kraftstoff ausschließlich mittels der Kraftstoffinjektoren 16 in die Brennräume 12 des Verbrennungsmotors 10 eingespritzt.

### Bezugszeichenliste

- 10: Verbrennungsmotor
- 12: Brennraum
- 14: Zündkerze
- 16: Kraftstoffinjektor
- 18: Sensor

- 20: Ansaugtrakt
- 22: Einlass
- 24: Ansaugkanal
- 26: Luftfilter
- 28: Verdichter

- 30: Drosselklappe
- 32: Ladeluftkühler
- 34: Einmündung
- 36: Mischer
- 38: Einlassventil

- 40: Abgasanlage
- 42: Auslass
- 44: Auslassventil
- 46: Abgaskanal
- 48: Turbine

- 50: Drei-Wege-Katalysator
- 52: Vier-Wege-Katalysator
- 54: Ottopartikelfilter
- 56: Abgassensor
- 58: Verzweigung

- 60: Abgasrückführung
- 62: Abgasrückführungsleitung
- 64: Abgasrückführungsventil
- 66: Abgasrückführungsfilter
- 68: Abgasrückführungskatalysator

- 70: erster Abgasrückführungskühler
- 72: zweiter Abgasrückführungskühler
- 74: Kraftstoffinjektor
- 76: erste Lambdasonde / Breitbandsonde
- 78: zweite Lambdasonde / Sprungsonde

- 80: Abgasturbolader
- 82: Temperatursensor
- 84: optionaler Temperatursensor nach AGR-Kühler
- 86: Waste-Gate

- 90: Motorsteuergerät

- λ_{E}: Verbrennungsluftverhältnis des Verbrennungsmotors
- λ₁: Abgasluftverhältnis an der ersten Lambdasonde
- λ₂: Abgasluftverhältnis an der zweiten Lambdasonde
- λ_{AGR}: Abgasluftverhältnis in der Abgasrückführung stromabwärts des Kraftstoffinjektors
- λ_{S}: Schwellenwert des Restsauerstoffs im Abgas

- AGR: Abgasrückführungsrate
- P: Lastanforderung
- Ps: Schwellenwert der Lastanforderung
- T: Temperatur
- T_{CC}: Brennraumtemperatur
- T_{EG}: Abgastemperatur

## Patentansprüche

1. Verfahren zum Betreiben eines Verbrennungsmotors (10) mit mindestens einem Brennraum (12), dessen Einlass (22) mit einem Ansaugtrakt (20) und dessen Auslass (42) mit einer Abgasanlage (40) des Verbrennungsmotors (10) verbunden ist, wobei an jedem Brennraum (12) mindestens eine Zündeinrichtung (14) angeordnet ist, um ein Verbrennungsluftgemisch in dem Brennraum (12) zu zünden, wobei der Verbrennungsmotor (10) mittels eines Abgasturboladers (80) aufgeladen ist, welcher eine in der Abgasanlage (40) angeordnete Turbine (48) umfasst, die einen in dem Ansaugtrakt (20) angeordneten Verdichter (28) antreibt, wobei in der Abgasanlage (40) stromabwärts der Turbine (28) mindestens ein Katalysator (50, 52) mit einer Drei-Wege-Funktion angeordnet ist, wobei in der Abgasanlage (40) stromaufwärts des Katalysators (50, 52) ein Abgassensor (56, 76) zur Erfassung einer Sauerstoffkonzentration im Abgas des Verbrennungsmotors (10) angeordnet ist, sowie mit einer Niederdruck-Abgasrückführung (60), welche die Abgasanlage (40) stromabwärts der Turbine (48) mit dem Ansaugtrakt (20) stromaufwärts des Verdichters (28) verbindet, sowie mit einem in der Niederdruck-Abgasrückführung (60) angeordneten Kraftstoffinjektor (74), umfassend folgende Schritte:
- Ermitteln eines Restsauerstoffgehalts (λ₁) in dem Abgasstrom des Verbrennungsmotors (10) stromaufwärts des Katalysators (50, 52),
- Ermitteln einer Lastanforderung (P) an den Verbrennungsmotor (10),
- Einspritzen von Kraftstoff in die Niederdruck-Abgasrückführung (60), wenn der Restsauerstoffgehalt (λ₁) im Abgasstrom des Verbrennungsmotors (10) über einem Schwellenwert λ_{S} liegt und die Lastanforderung (P) einen Schwellenwert P_{S} übersteigt, welcher eine unvollständige Umsetzung des in die Brennräume (12) eingespritzten Kraftstoffs erwarten lässt,
- Anpassen der Einspritzmenge in die Brennräume (12), wenn der Restsauerstoffgehalt (λ₁) im Abgasstrom des Verbrennungsmotors (10) den Schwellenwert λ_{S} übersteigt.

2. Verfahren zum Betreiben eines Verbrennungsmotors (10) nach Anspruch 1, **dadurch gekennzeichnet, dass** die in die Brennräume (12) des Verbrennungsmotors (10) eingespritzte Kraftstoffmenge unterproportional zur Lasterhöhung angehoben wird und gleichzeitig die in die Niederdruck-Abgasrückführung (60) eingespritzte Kraftstoffmenge erhöht wird.

3. Verfahren zum Betreiben eines Verbrennungsmotors (10) nach einem der Ansprüche 1 oder 2, **dadurch gekennzeichnet, dass** ein Einspritzzeitpunkt für die Kraftstoffeinspritzung in die Brennräume (12) des Verbrennungsmotors (10) angepasst wird.

4. Verfahren zum Betreiben eines Verbrennungsmotors (10) nach Anspruch 3, **dadurch gekennzeichnet, dass** der Einspritzzeitpunkt für die Kraftstoffeinspritzung in die Brennräume (12) des Verbrennungsmotors (10) in Richtung "spät" verschoben wird.

5. Verfahren zum Betreiben eines Verbrennungsmotors (10) nach einem der Ansprüche 1 bis 4, **dadurch gekennzeichnet, dass** ein Zündzeitpunkt für ein Kraftstoff-Luft-Gemisch in den Brennräumen (12) des Verbrennungsmotors (10) angepasst wird.

6. Verfahren zum Betreiben eines Verbrennungsmotors (10) nach einem der Ansprüche 1 bis 5, **dadurch gekennzeichnet, dass** zusätzlich eine Kraftstoffeinspritzung in den Ansaugtrakt (20) des Verbrennungsmotors (10) erfolgt.

7. Verfahren zum Betreiben eines Verbrennungsmotors (10) nach einem der Ansprüche 1 bis 6, **dadurch gekennzeichnet, dass** eine Brennraumtemperatur (T_{CC}) und/oder eine Abgastemperatur (T_{EG}) ermittelt wird, wobei die Abgasrückführungsrate (AGR) der Niederdruck-Abgasrückführung (60) erhöht wird, wenn die Brennraumtemperatur (T_{CC}) oder die Abgastemperatur (T_{EG}) jeweils einen definierten Schwellenwert übersteigt.

8. Verfahren zum Betreiben eines Verbrennungsmotors (10) nach einem der Ansprüche 1 bis 7, **dadurch gekennzeichnet, dass** der Verbrennungsmotor (10) bei der Durchführung eines erfindungsgemäßen Verfahrens mit einem stöchiometrischen Verbrennungsluftverhältnis (λ_{E} = 1) betrieben wird.

9. Verbrennungsmotor (10) mit mindestens einem Brennraum (12), dessen Einlass (22) mit einem Ansaugtrakt (20) und dessen Auslass (42) mit einer Abgasanlage (40) des Verbrennungsmotors (10) verbunden ist, wobei an jedem Brennraum (12) mindestens eine Zündeinrichtung (14) angeordnet ist, um ein Verbrennungsluftgemisch in dem Brennraum (12) zu zünden, wobei der Verbrennungsmotor (10) mittels eines Abgasturboladers (80) aufgeladen ist, welcher eine in der Abgasanlage (40) angeordnete Turbine (48) umfasst, die einen in dem Ansaugtrakt (20) angeordneten Verdichter (28) antreibt, wobei in der Abgasanlage (40) stromabwärts der Turbine (28) mindestens ein Katalysator (50, 52) mit einer Drei-Wege-Funktion angeordnet ist, wobei in der Abgasanlage (40) stromaufwärts des Katalysators (50, 52) ein Abgassensor (56, 76) zur Erfassung einer Sauerstoffkonzentration im Abgas des Verbrennungsmotors (10) angeordnet ist, sowie mit einer Niederdruck-Abgasrückführung (60), welche die Abgasanlage (40) stromabwärts der Turbine (48) mit dem Ansaugtrakt (20) stromaufwärts des Verdichters (28) verbindet, sowie mit einem in der Niederdruck-Abgasrückführung (60) angeordneten Kraftstoffinjektor (74), **dadurch gekennzeichnet, dass** dem Verbrennungsmotor (10) ein Motorsteuergerät (90) zugeordnet ist, mit welchem ein Verfahren nach einem der Ansprüche 1 bis 8 ausgeführt wird, wenn ein maschinenlesbarer Programmcode durch das Motorsteuergerät (90) ausgeführt wird.

10. Verbrennungsmotor (10) nach Anspruch 9, **dadurch gekennzeichnet, dass** der Katalysator (50, 52) ein Drei-Wege-Katalysator (50) oder ein Vier-Wege-Katalysator (52) ist.

11. Verbrennungsmotor (10) nach Anspruch 9 oder 10, **dadurch gekennzeichnet, dass** der Verbrennungsmotor (10) als direkteinspritzender Ottomotor ausgeführt ist.

12. Verbrennungsmotor (10) nach einem der Ansprüche 9 bis 11, **dadurch gekennzeichnet, dass** der Kraftstoffinjektor (74) in der Niederdruck-Abgasrückführung (60) stromaufwärts eines Abgasrückführungskühlers (70, 72) oder stromabwärts eines Abgasrückführungskühlers (70, 72) angeordnet ist.

13. Verbrennungsmotor (10) nach einem der Ansprüche 9 bis 11, **dadurch gekennzeichnet, dass** der Kraftstoffinjektor (74) in der Niederdruck-Abgasrückführung (60) stromabwärts eines ersten Abgasrückführungskühlers (70) und stromaufwärts eines zweiten Abgasrückführungskühlers (72) oder in einem Abgasrückführungskühler (70, 72) angeordnet ist.

14. Abgasnachbehandlungssystem für einen Verbrennungsmotor (10) nach einem der Ansprüche 9 bis 13, **dadurch gekennzeichnet, dass** im Abgaskanal (46) stromaufwärts eines Drei-Wege-Katalysators (50) oder stromaufwärts eines Vier-Wege-Katalysators (52) eine Lambdasonde (76) angeordnet ist, mit welcher ein stöchiometrisches Verbrennungsluftverhältnis des Verbrennungsmotors (10) eingeregelt wird.

## Claims

1. Method for operating an internal combustion engine (10) comprising at least one combustion chamber (12), the inlet (22) of which is connected to an intake tract (20) and the outlet (42) of which is connected to an exhaust gas system (40) of the internal combustion engine (10), wherein at least one ignition device (14) is arranged at each combustion chamber (12) in order to ignite a combustion air mixture in the combustion chamber (12), wherein the internal combustion engine (10) is supercharged by means of an exhaust turbocharger (80) which comprises a turbine (48) which is arranged in the exhaust gas system (40) and drives a compressor (28) arranged in the intake tract (20), wherein at least one catalytic converter (50, 52) with a three-way function is arranged in the exhaust gas system (40) downstream of the turbine (28), wherein an exhaust gas sensor (56, 76) for detecting an oxygen concentration in the exhaust gas of the internal combustion engine (10) is arranged in the exhaust gas system (40) upstream of the catalytic converter (50, 52), and comprising a low-pressure exhaust gas recirculation system (60) which connects the exhaust gas system (40) downstream of the turbine (48) to the intake tract (20) upstream of the compressor (28), and comprising a fuel injector (74) arranged in the low-pressure exhaust gas recirculation system (60), the method comprising the following steps:
- determining a residual oxygen content (λ₁) in the exhaust gas flow of the internal combustion engine (10) upstream of the catalytic converter (50, 52),
- determining a load requirement (P) on the internal combustion engine (10),
- injecting fuel into the low-pressure exhaust gas recirculation system (60) when the residual oxygen content (λ₁) in the exhaust gas flow of the internal combustion engine (10) is above a threshold value λ_{S} and the load requirement (P) exceeds a threshold value Ps which is expected to result in incomplete conversion of the fuel injected into the combustion chambers (12),
- adjusting the injection quantity into the combustion chambers (12) when the residual oxygen content (λ₁) in the exhaust gas flow of the internal combustion engine (10) exceeds the threshold value λ_{S}.

2. Method for operating an internal combustion engine (10) according to claim 1, **characterized in that** the fuel quantity injected into the combustion chambers (12) of the internal combustion engine (10) is increased disproportionately to the increase in load and, at the same time, the fuel quantity injected into the low-pressure exhaust gas recirculation system (60) is increased.

3. Method for operating an internal combustion engine (10) according to either claim 1 or 2, **characterized in that** an injection time for the fuel injection into the combustion chambers (12) of the internal combustion engine (10) is adjusted.

4. Method for operating an internal combustion engine (10) according to claim 3, **characterized in that** the injection time for the fuel injection into the combustion chambers (12) of the internal combustion engine (10) is shifted toward "late".

5. Method for operating an internal combustion engine (10) according to any of claims 1 to 4, **characterized in that** an ignition time for a fuel-air mixture in the combustion chambers (12) of the internal combustion engine (10) is adjusted.

6. Method for operating an internal combustion engine (10) according to any of claims 1 to 5, **characterized in that,** additionally, fuel is injected into the intake tract (20) of the internal combustion engine (10).

7. Method for operating an internal combustion engine (10) according to any of claims 1 to 6, **characterized in that** a combustion chamber temperature (Tcc) and/or an exhaust gas temperature (T_{EG}) is determined, wherein the exhaust gas recirculation rate (EGR) of the low-pressure exhaust gas recirculation system (60) is increased when the combustion chamber temperature (Tcc) or the exhaust gas temperature (T_{EG}) exceeds a defined threshold value.

8. Method for operating an internal combustion engine (10) according to any of claims 1 to 7, **characterized in that** the internal combustion engine (10) is operated at a stoichiometric combustion air ratio (λ_{E} = 1) when a method according to the invention is being carried out.

9. Internal combustion engine (10) comprising at least one combustion chamber (12), the inlet (22) of which is connected to an intake tract (20) and the outlet (42) of which is connected to an exhaust gas system (40) of the internal combustion engine (10), wherein at least one ignition device (14) is arranged at each combustion chamber (12) in order to ignite a combustion air mixture in the combustion chamber (12), wherein the internal combustion engine (10) is supercharged by means of an exhaust turbocharger (80) which comprises a turbine (48) which is arranged in the exhaust gas system (40) and drives a compressor (28) arranged in the intake tract (20), wherein at least one catalytic converter (50, 52) with a three-way function is arranged in the exhaust gas system (40) downstream of the turbine (28), wherein an exhaust gas sensor (56, 76) for detecting an oxygen concentration in the exhaust gas of the internal combustion engine (10) is arranged in the exhaust gas system (40) upstream of the catalytic converter (50, 52), and comprising a low-pressure exhaust gas recirculation system (60) which connects the exhaust gas system (40) downstream of the turbine (48) to the intake tract (20) upstream of the compressor (28), and comprising a fuel injector (74) arranged in the low-pressure exhaust gas recirculation system (60), **characterized in that** an engine controller (90) is assigned to the internal combustion engine (10), by means of which controller a method according to any of claims 1 to 8 is carried out when a machine-readable program code is executed by the engine controller (90).

10. Internal combustion engine (10) according to claim 9,
**characterized in that** the catalytic converter (50, 52) is a three-way catalytic converter (50) or a four-way catalytic converter (52).

11. Internal combustion engine (10) according to claim 9 or 10,
**characterized in that** the internal combustion engine (10) is in the form of a direct injection spark ignition engine.

12. Internal combustion engine (10) according to any of claims 9 to 11,
**characterized in that** the fuel injector (74) is arranged in the low-pressure exhaust gas recirculation system (60) upstream of an exhaust gas recirculation cooler (70, 72) or downstream of an exhaust gas recirculation cooler (70, 72).

13. Internal combustion engine (10) according to any of claims 9 to 11,
**characterized in that** the fuel injector (74) is arranged in the low-pressure exhaust gas recirculation system (60) downstream of a first exhaust gas recirculation cooler (70) and upstream of a second exhaust gas recirculation cooler (72) or in an exhaust gas recirculation cooler (70, 72).

14. Exhaust gas aftertreatment system for an internal combustion engine (10) according to any of claims 9 to 13, **characterized in that** a lambda probe (76) is arranged in the exhaust gas duct (46) upstream of a three-way catalytic converter (50) or upstream of a four-way catalytic converter (52), by means of which probe a stoichiometric combustion air ratio of the internal combustion engine (10) is regulated.

## Revendications

1. Procédé de fonctionnement d'un moteur à combustion interne (10) comportant au moins une chambre de combustion (12), dont l'entrée (22) est reliée à un conduit d'aspiration (20) et dont la sortie (42) est reliée à un système de gaz d'échappement (40) du moteur à combustion interne (10), dans lequel au moins un dispositif d'allumage (14) est agencé sur chaque chambre de combustion (12), pour allumer un mélange d'air de combustion dans la chambre de combustion (12), dans lequel le moteur à combustion interne (10) est suralimenté au moyen d'un turbocompresseur à gaz d'échappement (80) qui comprend une turbine (48) agencée dans le système de gaz d'échappement (40), laquelle turbine entraîne un compresseur (28) agencé dans le conduit d'aspiration (20), dans lequel au moins un catalyseur (50, 52) comportant une fonction à trois voies est agencé dans le système de gaz d'échappement (40) en aval de la turbine (28), dans lequel un capteur de gaz d'échappement (56, 76) est agencé dans le système de gaz d'échappement (40) en amont du catalyseur (50, 52) pour détecter une concentration en oxygène dans les gaz d'échappement du moteur à combustion interne (10), ainsi que comportant une recirculation des gaz d'échappement à basse pression (60) qui relie le système de gaz d'échappement (40) en aval de la turbine (48) au conduit d'aspiration (20) en amont du compresseur (28), ainsi que comportant un injecteur de carburant (74) agencé dans la recirculation des gaz d'échappement à basse pression (60), comprenant les étapes suivantes :
- détermination d'une teneur en oxygène résiduel (λ₁) dans le flux de gaz d'échappement du moteur à combustion interne (10) en amont du catalyseur (50, 52),
- détermination d'une demande de charge (P) pour le moteur à combustion interne (10),
- injection de carburant dans la recirculation des gaz d'échappement à basse pression (60) lorsque la teneur en oxygène résiduel (λ₁) dans le flux de gaz d'échappement du moteur à combustion interne (10) est supérieure à une valeur seuil λ_{S} et que la demande de charge (P) dépasse une valeur seuil Ps qui laisse prévoir une conversion incomplète du carburant injecté dans les chambres de combustion (12),
- ajustement de la quantité injectée dans les chambres de combustion (12) lorsque la teneur en oxygène résiduel (λ₁) dans le flux de gaz d'échappement du moteur à combustion interne (10) dépasse la valeur seuil λ_{S}.

2. Procédé de fonctionnement d'un moteur à combustion interne (10) selon la revendication 1, **caractérisé en ce que** la quantité de carburant injectée dans les chambres de combustion (12) du moteur à combustion interne (10) est augmentée de manière sous-proportionnelle à l'augmentation de charge et, simultanément, la quantité de carburant injectée dans la recirculation des gaz d'échappement à basse pression (60) est augmentée.

3. Procédé de fonctionnement d'un moteur à combustion interne (10) selon l'une des revendications 1 ou 2, **caractérisé en ce qu'**un instant d'injection pour l'injection de carburant dans les chambres de combustion (12) du moteur à combustion interne (10) est ajusté.

4. Procédé de fonctionnement d'un moteur à combustion interne (10) selon la revendication 3, **caractérisé en ce que** l'instant d'injection pour l'injection de carburant dans les chambres de combustion (12) du moteur à combustion interne (10) est décalé dans un sens de « retard ».

5. Procédé de fonctionnement d'un moteur à combustion interne (10) selon l'une des revendications 1 à 4, **caractérisé en ce qu'**un instant d'allumage pour un mélange carburant-air dans les chambres de combustion (12) du moteur à combustion interne (10) est ajusté.

6. Procédé de fonctionnement d'un moteur à combustion interne (10) selon l'une des revendications 1 à 5, **caractérisé en ce qu'**une injection de carburant dans le conduit d'aspiration (20) du moteur à combustion interne (10) est en outre effectuée.

7. Procédé de fonctionnement d'un moteur à combustion interne (10) selon l'une des revendications 1 à 6, **caractérisé en ce qu'**une température de chambre de combustion (Tcc) et/ou une température de gaz d'échappement (T_{EG}) est déterminée, dans lequel le taux de recyclage des gaz d'échappement (AGR) de la recirculation des gaz d'échappement à basse pression (60) est augmenté lorsque la température de chambre de combustion (Tcc) ou la température de gaz d'échappement (T_{EG}) dépasse respectivement une valeur seuil définie.

8. Procédé de fonctionnement d'un moteur à combustion interne (10) selon l'une des revendications 1 à 7, **caractérisé en ce que** le moteur à combustion interne (10) fonctionne avec un rapport d'air de combustion
stœchiométrique (λ_{E} = 1) lors de la mise en œuvre d'un procédé selon l'invention.

9. Moteur à combustion interne (10) comportant au moins une chambre de combustion (12) dont l'entrée (22) est reliée à un conduit d'aspiration (20) et dont la sortie (42) est reliée à un système de gaz d'échappement (40) du moteur à combustion interne (10), dans lequel au moins un dispositif d'allumage (14) est agencé sur chaque chambre de combustion (12) pour allumer un mélange d'air de combustion dans la chambre de combustion (12), dans lequel le moteur à combustion interne (10) est suralimenté au moyen d'un turbocompresseur à gaz d'échappement (80) qui comprend une turbine (48) agencée dans le système de gaz d'échappement (40), laquelle turbine entraîne un compresseur (28) agencé dans le conduit d'aspiration (20), dans lequel au moins un catalyseur (50, 52) comportant une fonction à trois voies est agencé dans le système de gaz d'échappement (40) en aval de la turbine (28), dans lequel un capteur de gaz d'échappement (56, 76) est agencé dans le système de gaz d'échappement (40) en amont du catalyseur (50, 52) pour détecter une concentration en oxygène dans les gaz d'échappement du moteur à combustion interne (10), ainsi que comportant une recirculation des gaz d'échappement à basse pression (60) qui relie le système de gaz d'échappement (40) en aval de la turbine (48) au conduit d'aspiration (20) en amont du compresseur (28), ainsi que comportant un injecteur de carburant (74) agencé dans la recirculation des gaz d'échappement à basse pression (60), **caractérisé en ce que**, au moteur à combustion interne (10) est associé un appareil de commande de moteur (90) avec lequel un procédé selon l'une des revendications 1 à 8 est exécuté lorsqu'un code de programme lisible par machine est exécuté par l'appareil de commande de moteur (90).

10. Moteur à combustion interne (10) selon la revendication 9,
**caractérisé en ce que** le catalyseur (50, 52) est un catalyseur à trois voies (50) ou un catalyseur à quatre voies (52).

11. Moteur à combustion interne (10) selon la revendication 9 ou 10,
**caractérisé en ce que** le moteur à combustion interne (10) est exécuté sous la forme d'un moteur à essence à injection directe.

12. Moteur à combustion interne (10) selon l'une des revendications 9 à 11,
**caractérisé en ce que** l'injecteur de carburant (74) est agencé dans la recirculation des gaz d'échappement à basse pression (60) en amont d'un refroidisseur de recirculation des gaz d'échappement (70, 72) ou en aval d'un refroidisseur de recirculation des gaz d'échappement (70, 72).

13. Moteur à combustion interne (10) selon l'une des revendications 9 à 11,
**caractérisé en ce que** l'injecteur de carburant (74) est agencé dans la recirculation des gaz d'échappement à basse pression (60) en aval d'un premier refroidisseur de recirculation des gaz d'échappement (70) et en amont d'un second refroidisseur de recirculation des gaz d'échappement (72) ou dans un refroidisseur de recirculation des gaz d'échappement (70, 72).

14. Système de post-traitement des gaz d'échappement pour un moteur à combustion interne (10) selon l'une des revendications 9 à 13,
**caractérisé en ce qu'**une sonde lambda (76) est agencée dans le canal d'échappement (46) en amont d'un catalyseur à trois voies (50) ou en amont d'un catalyseur à quatre voies (52), avec laquelle sonde un rapport d'air de combustion stœchiométrique du moteur à combustion interne (10) est régulé.
